# NEUE EUROPÄISCHE PATENTSCHRIFT

(11) **EP 1 223 291 B2**
(45) Veröffentlichungstag und Bekanntmachung des Hinweises auf die Entscheidung über den Einspruch: **23.05.2007**
(45) Hinweis auf die Patenterteilung: 13.08.2003
(21) Anmeldenummer: 02000186.3
(22) Anmeldetag: 09.01.2002
(51) Int. Cl.: E06B 3/96, F16B 7/04

(54) **Verbinder mit Stanzschraube**
Connector with punching screw
Connecteur avec vis poiçonneuse

(30) Priorität: 11.01.2001 DE 10101201
(43) Veröffentlichungstag der Anmeldung: 17.07.2002
(73) Patentinhaber: NORSK HYDRO ASA, 0257 Oslo 2 (NO)
(72) Erfinder: Brüderl, Dietmar, 89077 Ulm (DE); Bertele, Josef, 89077 Ulm (DE); Rogg, Gerhard, 89077 Ulm (DE)
(74) Vertreter: Wilhelms, Rolf E.

(56) Entgegenhaltungen:
- DE-A- 2 236 321
- DE-A- 2 913 281
- DE-C- 3 716 617
- "SCHÜCO-Katalog", Ausgabe 01/05/1973, Seiten 100 und 38

## Beschreibung

Die Erfindung betrifft Verbinder mit Stanzschraube, wie sie beispielsweise zum Einbau von Sprossen bei Fenstern bekannt sind. Ein solcher Verbinder wird beispielsweise in den Verarbeitungsrichtlinien WICLINE 60, Seite 82 von der Anmelderin beschrieben. Ein solcher Verbinder entspricht dem Oberbegriff des Anspruchs 1.

Dieser vorbekannte Verbinder ist einklipsbar ausgebildet; die Stanzschraube wird durch die axiale Bohrung im Verbinderkopf eingeführt und zwischen den äußeren Enden der Verbinderschenkel verschraubt, so daß der Stanzstift das zu verbindende Bauteil durchtritt und die Stanzschraube die nach außen krallenförmig ausgebildeten Schenkelenden im entsprechenden Profil des zu verbindenden Bauteils fixiert.

Bei der Montage wird die lose Stanzschraube auf einen Sechskantschlüssel aufgesteckt, durch die axiale Bohrung im Kopfteil des Verbinders bis zwischen die Schenkelenden des Verbinders eingeführt und hier verschraubt.

Nachteilig an dieser Lösung ist der Umstand, daß auf diese Weise eine Montageautomatisierung nicht erfolgen kann; darüberhinaus erfordert die notwendige Handarbeit erhebliches Geschick; schließlich tritt bei hohem Arbeitsdruck häufig Verlust der Stanzschraube auf.

Aufgabe der Erfindung ist es, diese Nachteile zu überwinden und insbesondere Verbinder zur Verfügung zu stellen, die Montageautomatisierung ermöglichen.

Diese erfindungsgemäße Aufgabe wird durch den Verbinder gemäß Anspruch 1, 4, 5 oder 6 gelöst; die Ansprüche 2 und 3 betreffen weitere vorteilhafte Ausgestaltungen der Erfindung.

Die Erfindung wird anhand der folgenden Figuren näher erläutert. Hierbei zeigen die
Figuren 1a und 1b schematisch einen Verbinder aus dem Stand der Technik;
Figuren 2a bis 2c eine bevorzugte Ausführungsform eines erfindungsgemäßen Verbinders;
Figuren 3a und 3b eine weitere erfindungsgemäße Ausführungsform;
Figur 4 eine andere erfindungsgemäße Ausführungsform;
Figur 5 zeigt eine weitere erfindungsgemäße Ausführungsform, bei der die Stanzschraube in einem Gewinde gelagert ist; und
Figur 6 eine andere Ausführungsform der Lösung nach Figur 5.

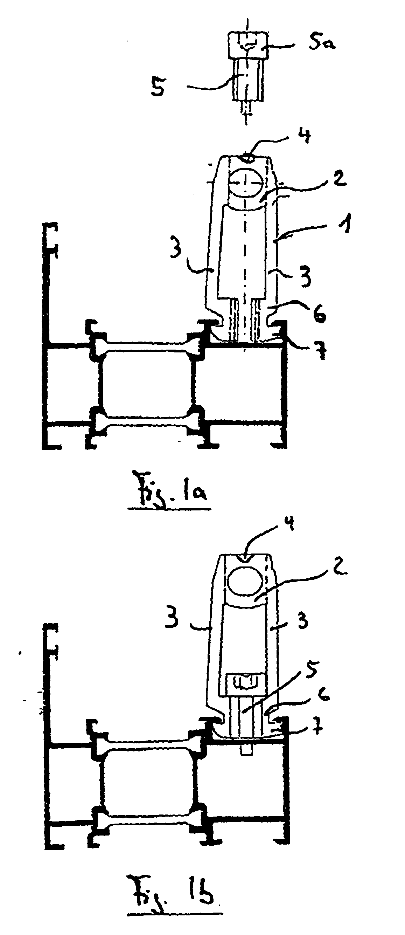

Gemäß Figuren 1a und 1b ist der gattungsgemäße Verbinder pinzettenförmig ausgebildet und weist zwei gegeneinander federnde Schenkel 3 auf; diese sind in ihrem Fußbereich 6 hakenförmig 7 nach außen weisend zur Unterfassung eines Profils ausgebildet. Die lose Stanzschraube 5 wird auf einen Sechskantschlüssel aufgesetzt, durch die Öffnung 4 der axialen Bohrung durch den Verbinderkopf 2 eingeführt und im Fußbereich 6 zur Fixierung des Verbinders mit dem Profil verschraubt.

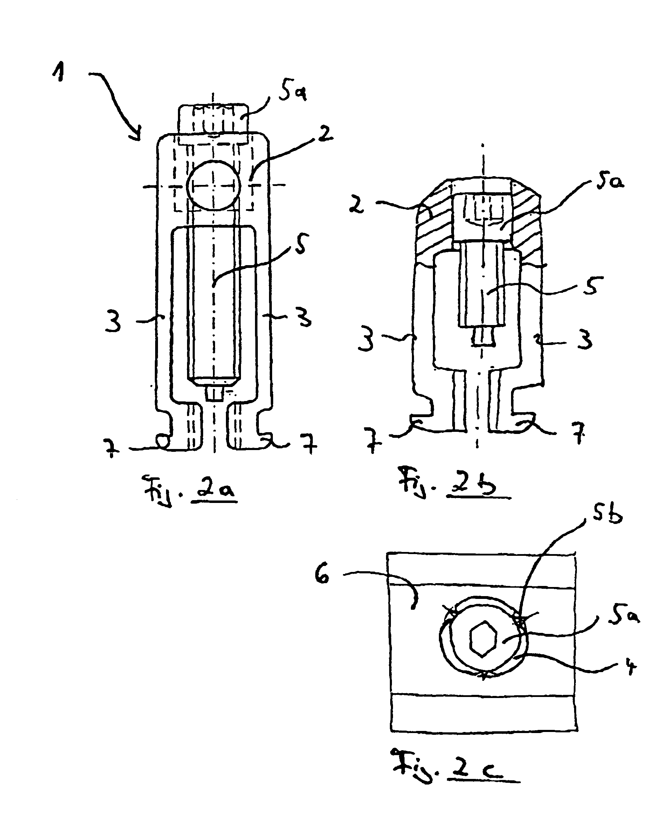

In den Figuren 2a bis 2c wird eine bevorzugte Ausführungsform des erfindungsgemäßen Verbinders schematisch wiedergegeben. Hierbei ist die Stanzschraube 5 im Kopfbereich 2 des Verbinders 1 innerhalb der axialen Bohrung lösbar fixiert. Dieses kann beispielsweise durch Verklemmen oder Verkleben des Schraubenkopfes 5a in der Bohrung erfolgen. Bei der Ausführung gemäß den Figuren 2b und 2c sind entweder am äußeren Rand des Schraubenkopfes 5a oder innerhalb der Bohrung 4 Kerbungen bzw. Grate 5b vorgesehen, die dimensionsmäßig derart ausgebildet sind, daß der Schraubenkopf 5a in der Bohrung 4 verklemmt, jedoch gegen axialen Druck verschiebbar ist. Hierbei kann die Bohrung 4 zusätzlich als Steuerung des exakten axialen Einschubs in den Fuß 6 des Verbinders 1 dienen.

Ebenfalls kann vorgesehen sein, daß am Schraubenkopf 5a außen ein nach oben und unten offenes kurzes Gewinde angeordnet ist, das mit einem gleichen Gegengewinde im inneren der zentralen Bohrung zusammenwirkt. Hierbei können beispielsweise Gewinde und Gegengewinde derart ausgebildet sein, daß der Schraubenkopf 5a mit einer halben Drehung im Innengewinde in der zentralen Bohrung gehaltert wird, während er nach einer weiteren halben Drehung frei und ohne weitere Drehung axial in Richtung auf die hakenförmigen Schenkelenden 7 führbar ist.

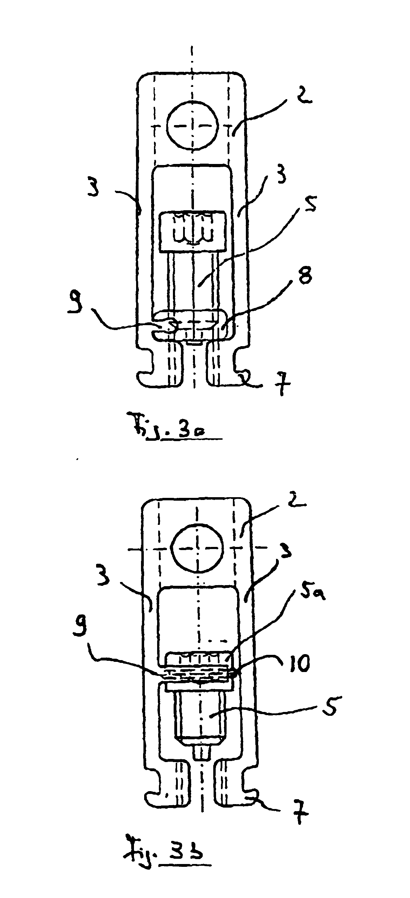

In den Figuren 3a und 3b ist eine weitere bevorzugte Ausführungsform des erfindungsgemäßen Verbinders in schematischer Seitenansicht wiedergegeben. Auch hier betreffen die Bezugszeichen, sofern nichts anderes angegeben, die gleichen Bauteile wie in Figur 1. Bei dieser Ausführungsform ist die Stanzschraube 5 zwischen den Schenkeln 3 des Verbinders 1 lösbar gelagert bzw. gehaltert. Die Halterungsvorrichtung an der Innenseite eines Schenkels 3 weist einen Steg 9 auf, der in den Freiraum zwischen den Schenkeln 3 hineinragt und eine Kunststoffmutter 8 oder einen O-Ring 10 aufweist, die den Schraubenschaft bzw. den Schraubenkopf 5a lösbar haltert, so daß bei axialer Krafteinwirkung die Stanzschraube 5 zwischen die hakenförmigen Enden 7 der Schenkel 3 geführt und eingeschraubt werden kann.

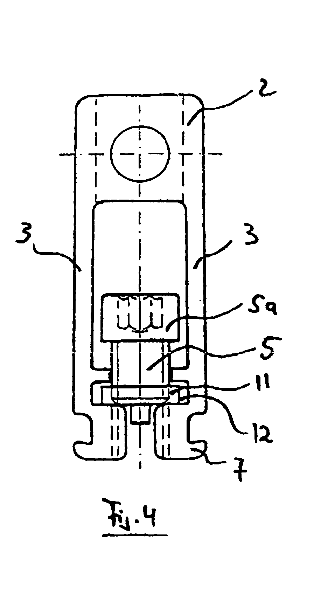

Figur 4 zeigt in schematischer Seitenansicht eine weitere bevorzugte Ausführungsform des erfindungsgemäßen Verbinders, wobei die Stanzschraube 5 derart ausgebildet ist, daß sie seitwärts in den Freiraum zwischen den Schenkeln 3 des Verbinders 1 verklemmbar eingeschoben werden kann. Hierbei kann ein wulstförmiger Ring 11 vorgesehen sein, der den Umfang des Stanzschraubenschaftes lösbar umschließt, und der materialmäßig (Gummi, Schaumstoff) und/oder dimensionsmäßig derart gewählt ist, daß er in eine nutenförmige Ausnehmung 12 in den inneren Seitenwänden der Schenkel 3 eingesteckt werden kann und unter axialem Druck auf die Stanzschraube 5 den Stanzschraubenschaft durchgleiten läßt.

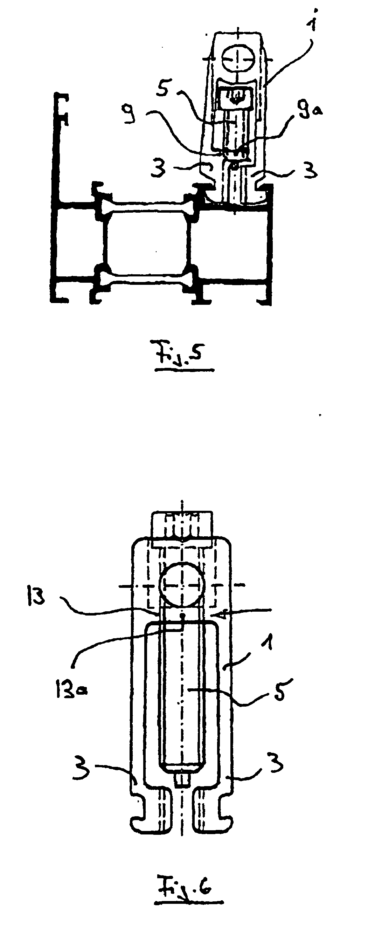

Figur 5 zeigt eine weitere bevorzugte Ausführungsform, bei der innerhalb des Verbinderkörpers ein Steg 9 vorgesehen ist, der mittig eine Öffnung mit Innengewinde 9a aufweist, wobei dieses Innengewinde dem Außengewinde der Stanzschraube 5 entspricht, so daß die Stanzschraube 5 in diese Öffnung 9a eingeschraubt und hierdurch dort gehaltert wird, wobei bei der Montage die Stanzschraube 5 durch Schrauben zwischen die Verbinderschenkel 3 zur Aufspreizung der Schenkel 3 und zur Verschraubung im Profilteil bewegt wird.

Schließlich zeigt Figur 6 eine bevorzugte Lösung, bei der in der verbleibenden Wand 13 zwischen Senkung und Kammer des Verbinders eine Öffnung mit Innengewinde 13a angeordnet ist, wobei das Innengewinde 13a dem Außengewinde der Stanzschraube 5 entspricht, und wobei diese, vergleichbar wie in Figur 5, im Gewinde 13a gelagert und in axialer Richtung durch Schraubbewegung bewegbar ist.

## Patentansprüche

1. Verbinder mit Stanzschraube (5), wobei
- der Verbinder pinzettenförmig mit zwei gegeneinander federnden Schenkel (3) ausgebildet ist,
- der Kopfbereich (2) des Verbinders die Öffnung einer zentralen Längsbohrung zum Einschub der Stanzschraube (5) aufweist und
- die Schenkel (3) im Fußbereich des Verbinders hakenförmig, nach außen weisend und gegeneinander federnd ausgebildet sind,
- **dadurch gekennzeichnet, dass**
- die Stanzschraube (5) innerhalb des Verbinderkörpers (1) an ihrem Kopf (5a) im Kopfbereich (2) des Verbinders in axialer Richtung beweglich oder lösbar gelagert ist, ohne hierbei das Gegeneinandegedern der Schenkel (3), zu behindern und die Stanzschraube (5) im Fußbereich des Verbinders zur fixierung des Verbinders mit einem Profil verschraubar ist.

2. Verbinder nach Anspruch 1 **dadurch gekennzeichnet, dass** der Kopf (5a) der Stanzschraube (5) in der Längsbohrung im Kopfbereich (2) des Verbinders lösbar verklemmt oder verklebt ist.

3. Verbinder nach Anspruch 1 **dadurch gekennzeichnet, dass** der Kopf (5a) der Stanzschraube (5) ein kurzes Außengewinde aufweist, das mit einem Innengewinde der Längsbohrung im Kopfbereich (2) des Verbinders zusammenwirkt.

4. Verbinder mit Stanzschraube (5), wobei
- der Verbinder pinzettenförmig mit zwei gegeneinander federnden Schenkeln (3) ausgebildet ist,
- der Kopfbereich (2) des Verbinders die Öffnung einer zentralen Längsbohrung zum Einschub der Stanzschraube (5) aufweist und
- die Schenkel (3) im Fußbereich des Verbinders hakenförmig nach außen weisend und gegeneinander federnd ausgebildet sind,
- **dadurch gekennzeichnet, dass**
- die Stanzschraube (5) innerhalb des Verbinderkörpers (1) in axialer Richtung beweglich oder lösbar gelagert ist, ohne hierbei das Gegeneinanderfedern der Schenkel (3) zu behindern, und
- die Stanzschraube (5) zwischen den Schenkeln (3) mittels einer Kunststoffmutter (8) oder eines O-Ringes (10) gehalten ist, die bzw. der auf einem innerhalb eines Schenkels (3) angepressten Steg (9) fixiert ist, und die Stanzschraube (5) im Fußbereich des Verbinders zur Fixierung des Verbinders mit einem Profil verschraubar ist.

5. Verbinder mit Stanzschraube (5), wobei
- der Verbinder pinzettenförmig mit zwei gegeneinander federnden Schenkeln (3) ausgebildet ist,
- der Kopfbereich (2) des Verbinders die Öffnung einer zentralen Längsbohrung zum Einschub der Stanzschraube (5) aufweist und
- die Schenkel (3) im Fußbereich des Verbinders hakenförmig, nach außen weisend und gegeneinander federnd ausgebildet sind,
- **dadurch gekennzeichnet, dass**
- die Stanzschraube (5) innerhalb des Verbinderkörpers (1) in axialer Richtung beweglich oder lösbar gelagert ist ohne hierbei das gegeneinander Federn der Schenkel zu behindern,
- die Stanzschraube (5) einen umlaufenden, wulstförmigen Ring (11) aufweist, der in eine Nut (12) verklemmend eingeschoben ist, die zwischen den Schenkeln (3) ausgebildet ist, und die Stanzschraube (5) im Fußbereich des Verbinders zur Fixierung des Verbinders mit einem Profil verschaubar ist.

6. Verbinder mit Stanzschraube (5), wobei
- der Verbinder pinzettenförmig mit zwei gegeneinander federnden Schenkeln (3) ausgebildet ist,
- der Kopfbereich (2) des Verbinders die Öffnung einer zentralen Längsbohrung zum Einschub der Stanzschraube (5) aufweist und
- die Schenkel (3) im Fußbereich des Verbinders hakenförmig nach außen weisend und gegeneinander federnd ausgebildet sind
- **dadurch gekennzeichnet, dass**
- die Stanzschraube (5) innerhalb des Verbinderkörpers (1) in axialer Richtung beweglich oder lösbar gelagert ist, ohne hierbei das gegeneinander Federn der Schenkel zu behindern,
- innerhalb des Verbinderkörpers (1) ein Steg (9) mit einer Öffnung mit Innengewinde (9a) vorgesehen ist, das dem Außengewinde der Stanzschraube (5) entspricht und in dem die Stanzschraube (5) gelagert und in axialer Richtung durch Schraubbewegung bewegbar ist derart, dass durch die Schraubbewegung der Stanzschraube (5) die Schenkel (3) aufgespreizt werden, und die Stanzschraube (5) in einem Innengewinde im Fußbereich des Verbinders zur Fixierung des Verbinders mit einem Profil verschraubar ist.

## Claims

1. Connector with punching screw (5), wherein
- the connector is formed in the shape of tweezers with two counter-resilient legs (3),
- the head region (2) of the connector comprises the opening of a central longitudinal bore for inserting the punching screw (5), and
- in the foot region of the connector the legs (3) are hook-shaped, pointing outwards, and are counter-resilient,
- **characterised in that**
- the punching screw (5) is mounted inside the connector body (1) by its head (5a) in the head region (2) of the connector such that it can move or be released in the axial direction without inhibiting the counter-resilience of the legs (3) in the process and, in the foot region of the connector, the punching screw (5) can be screwed to a profile in order to fix the connector in position.

2. Connector according to Claim 1, **characterised in that** the head (5a) of the punching screw (5) is wedged or glued in the longitudinal bore in the head region (2) of the connector such that it can be released.

3. Connector according to Claim 1, **characterised in that** the head (5a) of the punching screw (5) has a short external thread which co-operates with an internal thread of the longitudinal bore in the head region (2) of the connector.

4. Connector with punching screw (5), wherein
- the connector is formed in the shape of tweezers with two counter-resilient legs (3),
- the head region (2) of the connector comprises the opening of a central longitudinal bore for inserting the punching screw (5), and
- in the foot region of the connector the legs (3) are hook-shaped, pointing outwards, and are counter-resilient,
- **characterised in that**
- the punching screw (5) is mounted inside the connector body (1) such that it can move or be released in the axial direction without inhibiting the counter-resilience of the legs (3) in the process and
- the punching screw (5) is held between the legs (3) by means of a plastics nut (8) or an 0-ring (10), which is fixed to a web (9) under pressure inside a leg (3), and, in the foot region of the connector, the punching screw (5) can be screwed to a profile in order to fix the connector in position.

5. Connector with punching screw (5), wherein
- the connector is formed in the shape of tweezers with two counter-resilient legs (3) ,
- the head region (2) of the connector comprises the opening of a central longitudinal bore for inserting the punching screw (5), and
- in the foot region of the connector the legs (3) are hook-shaped, pointing outwards, and are counter-resilient,
- **characterised in that**
- the punching screw (5) is mounted inside the connector body (1) such that it can move or be released in the axial direction without inhibiting the counter-resilience of the legs in the process,
- the punching screw (5) comprises a circumferential bead-like ring (11) which is inserted with a wedging action in a groove (12) formed between the legs (3), and, in the foot region of the connector, the punching screw (5) can be screwed to a profile in order to fix the connector in position.

6. Connector with punching screw (5), wherein
- the connector is formed in the shape of tweezers with two counter-resilient legs (3),
- the head region (2) of the connector comprises the opening of a central longitudinal bore for inserting the punching screw (5), and
- in the foot region of the connector the legs (3) are hook-shaped, pointing outwards, and are counter-resilient,
- **characterised in that**
- the punching screw (5) is mounted inside the connector body (1) such that it can move or be released in the axial direction without inhibiting the counter-resilience of the legs in the process,
- a web (9) with an opening with an internal thread (9a) is provided inside the connector body (1), which thread corresponds to the external thread of the punching screw (5) and in which the punching screw (5) is mounted and mobile in the axial direction through a screwing movement such that, through the screwing movement of the punching screw (5), the legs (3) are spread, and the punching screw (5) can be screwed, in an internal thread, in the foot region of the connector, to a profile in order to fix the connector in position.

## Revendications

1. Connecteur avec vis poinçonneuse (5),
- le connecteur étant réalisé en forme de pincette avec deux branches (3) à mobilité élastique l'une par rapport à l'autre,
- la zone de tête (2) du connecteur présentant l'ouverture d'un trou longitudinal central pour l'introduction des vis poinçonneuses (5), et
- les branches (3) dans la zone de pied du connecteur étant conformées en crochet, tournées vers l'extérieur et à mobilité élastique les unes par rapport aux autres,
- **caractérisé en ce que**
- la vis poinçonneuse (5) est montée avec une mobilité dans une direction axiale, à l'intérieur du corps de connecteur (1) au niveau de sa tête (5a) dans la zone de tête (2) ou bien montée de façon désolidarisable, sans entraver ici la mobilité élastique l'une par rapport à l'autre des branches (3) et **en ce que** la vis poinçonneuse (5) est vissable dans la zone de pied du connecteur pour fixer le connecteur à un profilé.

2. Connecteur selon la revendication 1, **caractérisé en ce que** la tête (5a) de la vis poinçonneuse (5) est serrée de façon désolidarisable ou collée dans le trou longitudinal dans la zone de tête (2) du connecteur.

3. Connecteur selon la revendication 1, **caractérisé en ce que** la tête (5a) de la vis poinçonneuse (5) présente un filetage extérieur court, lequel coopère avec un filetage intérieur du trou longitudinal dans la zone de tête (2) du connecteur.

4. Connecteur avec vis poinçonneuse (5),
- le connecteur étant réalisé en forme de pincette avec deux branches (3) à mobilité élastique l'une par rapport à l'autre
- la zone de tête (2) du connecteur présentant l'ouverture d'un trou longitudinal central pour l'introduction des vis poinçonneuses (5) et
- les branches (3) dans la zone de pied du connecteur étant conformées en crochet, tournées vers l'extérieur et à mobilité élastique les unes par rapport aux autres
- **caractérisé en ce que**
- la vis poinçonneuse (5) est montée avec une mobilité en direction axiale à l'intérieur du corps de connecteur (1) ou bien montée de façon désolidarisable, sans entraver ici la mobilité élastique l'une par rapport à l'autre des branches (3), et,
- la vis poinçonneuse (5) est maintenue entre les branches (3), au moyen d'un écrou (8) en matière synthétique ou d'une bague torique (10), fixé/fixée sur une nervure (9) formée par pressage à l'intérieur d'une branche (3), et la vise poinçonneuse (5) est vissable dans la zone de pied du connecteur pour fixer ce dernier sur un profilé.

5. Connecteur avec vis poinçonneuse (5),
- le connecteur étant réalisé en forme de pincette avec deux branches (3) à mobilité élastique l'une par rapport à l'autre
- la zone de tête (2) du connecteur présentant l'ouverture d'un trou longitudinal central pour l'introduction des vis poinçonneuses (5), et
- les branches (3) dans la zone de pied du connecteur étant conformées en crochet, tournées vers l'extérieur et à mobilité élastique les unes par rapport aux autres,
- **caractérisé en ce que**
- la vis poinçonneuse (5) est montée avec une mobilité en direction axiale à l'intérieur du corps de connecteur (1) ou bien montée de façon désolidarisable sans entraver ici la mobilité élastique l'une par rapport à l'autre des branches,
- la vis poinçonneuse (5) présente un anneau (11) en forme de bourrelet, de pourtour, susceptible d'être introduit avec serrage dans une gorge (12) réalisée entre les branches (3), et la vis poinçonneuse (5) est vissable dans la zone de pied du connecteur pour fixer ce dernier dans un profilé..

6. Connecteur avec vis poinçonneuse (5),
- le connecteur étant réalisé en forme de pincette avec deux branches (3) à mobilité élastique l'une par rapport à l'autre
- la zone de tête (2) du connecteur présentant l'ouverture d'un trou longitudinal central pour l'introduction des vis poinçonneuses (5), et
- les branches (3) dans la zone de pied du connecteur étant conformées en crochet, tournées vers l'extérieur et à mobilité élastique les unes par rapport aux autres,
- **caractérisé en ce que**
- la vis poinçonneuse (5) est montée avec une mobilité en direction axiale à l'intérieur du corps de connecteur (1) ou bien montée de façon désolidarisable sans entraver ici la mobilité élastique l'une par rapport à l'autre des branches,
- à l'intérieur du corps (1) de connecteur, est prévue une nervure (9) présentant une ouverture munie d'un taraudage (9a), qui correspond au filetage extérieur de la vis poinçonneuse (5) et dans lequel la vis poinçonneuse (5) est montée et est susceptible d'être déplacée dans la direction axiale par un mouvement de vissage de sorte que les branches (3) sont écartées par le mouvement de vissage de la vis poinçonneuse (5), et la vis poinçonneuse (5) est susceptible d'être vissée dans un filetage intérieur dans la zone de pied du connecteur pour fixer ce dernier à un profilé.
